# EUROPÄISCHE PATENTSCHRIFT

(11) **EP 1 265 749 B1**
(45) Veröffentlichungstag und Bekanntmachung des Hinweises auf die Patenterteilung: **14.11.2012**
(21) Anmeldenummer: 01915242.0
(22) Anmeldetag: 14.02.2001
(51) Int. Cl.: C08K 5/02, C08K 5/00, C08K 3/00, B32B 27/20

(54) **KUNSTSTOFFHOHLKÖRPER MIT ERHÖHTER BRANDFESTIGKEIT DURCH FLAMMSCHUTZMITTEL**
PLASTIC HOLLOW BODY HAVING AN INCREASED RESISTANCE TO BURNING DUE TO THE PROVISION OF FLAMEPROOFING AGENTS
CORPS CREUX EN MATIERE PLASTIQUE A RESISTANCE RENFORCEE AUX INCENDIES PAR DES AGENTS IGNIFUGES

(30) Priorität: 24.02.2000 DE 10008725
(43) Veröffentlichungstag der Anmeldung: 18.12.2002
(73) Patentinhaber: Basell Polyolefine GmbH, 50389 Wesseling (DE)
(72) Erfinder: ROHDE, Wolfgang, 67346 Speyer (DE); SPRINGHOLZ, Bernhard, 67547 Worms (DE); MIHAN, Shahram, 67061 Ludwigshafen (DE)
(74) Vertreter: Herzog, Martin
(86) Internationale Anmeldenummer: PCT/EP2001/001606
(87) Internationale Veröffentlichungsnummer: WO 2001/062493

(56) Entgegenhaltungen:
- EP-A- 0 461 612
- EP-A- 0 480 420
- EP-A- 0 933 196
- EP-A- 1 008 479
- SU-A- 1 821 502
- DATABASE WPI Section Ch, Week 199404 Derwent Publications Ltd., London, GB; Class A17, AN 1994-031535 XP002173967 & JP 05 338448 A (TONEN SEKIYU KAGAKU KK), 21. Dezember 1993 (1993-12-21)

## Beschreibung

Die vorliegende Erfindung betrifft Kunststoffhohlkörper mit erhöhter Brandfestigkeit, umfassend eine oder mehrere Schichten polymeren Materials, wobei mindestens eine Schicht Flammschutzmittel aufweist.

Ferner betrifft die vorliegende Erfindung die Verwendung derartiger Kunststoffhohlkörper mit erhöhter Brandfestigkeit als Kraftstoffbehälter im Automobilbau.

Kunststoffhohlkörper für die Lagerung und den Transport flüssiger Gefahrstoffe sind seit langem bekannt. Neben tragbaren Behältern aller Art, wie beispielsweise Benzinkanister, Kunststoffflaschen für Alkohole (Brennspiritus), Ether und dergleichen werden insbesondere im Fahrzeugbau Kunststoffhohlkörper in Form von Kraftstofftanks zur raum- und gewichtssparenden Bevorratung von Otto- und Dieselkraftstoffen verwendet. Hier haben sie inzwischen fast vollständig die schwereren Metallbauteile ersetzt.

Als sicherheitsrelevantes Bauteil werden an Kunststoffkraftstoffbehältern (KKB) im Automobil hohe Anforderungen an ihre Brandfestigkeit gestellt. Hierbei wird als Brandfestigkeit die Dauer der Beflammung eines flüssigkeitsgefüllten Behälters bis zum Auftreten von Löchern in der Behälterwand und Flüssigkeitsverlust verstanden. Diese Anforderungen werden nach ECE R34 Anhang 5 durch einen speziellen Brandtest geprüft. Die dort festgelegten Prüfanforderungen werden in der Regel erfüllt, zum einen durch Einsatz spezieller hochzäher Polymertypen und zum anderen aber auch dadurch, daß bestimmte Mindestwanddicken und damit Mindestgewichte des Kunststoffkraftstoffbehälters eingehalten werden. Das optimale Gewicht eines KKB ergibt sich dabei aus einem Optimierungsprozeß für die Bruch- und Brandfestigkeit. Oft limitiert die Brandfestigkeit des Bauteils das Gewicht des KKB nach unten.

Um die Brandfestigkeit eines KKB bei vorgegebener Oberflächengeometrie zu erhöhen, mußte bislang die Behälterwanddicke an den im Brandfalle besonders gefährdeten Zonen erhöht werden, welches eine entsprechende Gewichtszunahme nach sich zieht. Mit dem erhöhten Materialverbrauch und der verlängerten Abkühlzeit steigen grundsätzlich die Herstellkosten des Kunststoffkraftstoffbehälters. Zusätzlich verringert sich das nutzbare Tankvolumen, was für die Automobilherstellung nicht akzeptabel ist.

Es besteht daher ein Bedarf nach Möglichkeiten, das Tankgewicht bei festgelegter Oberflächenkontur zur reduzieren und dabei die Anforderungen bezüglich der Brandfestigkeit des Bauteils einzuhalten. Ferner wurde immer wieder nach Möglichkeiten gesucht, die Brandfestigkeit bei gegebenem Tankgewicht und Tankvolumen zu erhöhen.

Die EP 0 645 400 B1 beschreibt Polyethylentypen, die inhärent aufgrund ihrer speziellen Produktmerkmale eine erhöhte Brandfestigkeit aufweisen. Hierzu wird die Verwendung eines speziellen Ethylenpolymerisats zur Herstellung brandfester Kunststoffkraftstoffbehälter offenbart. Die Herstellung erfordert aber einen zweistufigen Herstellprozeß aus Vorpolymerisation und Hauptpolymerisation, sowie sehr spezielle Katalysatoren. Dieses Verfahren ist umständlich und teuer. Ferner müssen nach der Lehre der EP 645 400 eine ganze Reihe von Bedingungen gleichzeitig verfüllt sein, damit sich nach dieser Patentschrift Kunststoffkraftstoffbehälter mit erhöhter Brandfestigkeit aus dem Polyethylenmaterial fertigen lassen. Wie anhand der hier vorgestellten Beispiele zu sehen ist, gibt die in der EP 645 400 B1 vorgeschlagene Eigenschaftskombination keine generelle Gewähr für eine erhöhte Brandfestigkeit der daraus hergestellten Bauteile.

Die US-Patentschrift 5,020,687 offenbart Kunststoffkraftstoffbehälter mit verstärkenden Gewebeeinlagen aus flammhemmenden, in der Hitze aufschäumenden Materialien. Diese Verstärkungen müssen jedoch vorher in die Blasform eingebracht werden. Auch dieses Verfahren ist umständlich und teuer und kann darüber hinaus zu erheblichen Festigkeitsverlusten im Bauteil führen.

Weiterhin ist zum Beispiel aus EP A 106 099 oder DE A 196 17 592 bekannt, Kunststoffkraftstoffbehälter mit flammhemmenden Beschichtungen zu versehen. DE 19 50 992 offenbart einen KKB, der zusätzlich mit einer Metallfolie beschichtet ist. Beschichtungen solcher Art sind zumeist sehr teuer, da sie zusätzliche Prozeßschritte erfordern. Nachteilig ist außerdem, daß die Haftung solcher Beschichtungen auf PE gering ist, so daß sie im Falle eines Unfalls abplatzen können. Gerade dann ist aber die volle Wirksamkeit der Schicht zwingend erforderlich.

EP-A-0461612 offenbart eine Filmzusammensetzung und einen selbstverlöschenden laminierten Film. Die Filmzusammensetzung beinhaltend ein thermoplastisches Polymer mit einer Schmelzflussrate im Bereich von 20 bis 2000 (g/10 min.) und ein Flammschutzmittel. Das Flammschutzmittel kann ein organisches Flammschutzmittel beinhaltend ein Halogen, Phosphor oder Schwefel sein oder ein anorganisches Flammschutzmittel sein.

EP-A-1008479 offenbart ein Verfahren zur Erhöhung der Brandfestigkeit von Polyethylen enthaltenden Hohlkörpern beinhaltend mindestens eine Schicht mit mindestens 90 Gew.-% Ethylenhomo- oder copolymere mit einer Dichte von 0,94 - 0,97 g/cm³ und einer Schmelzfliessrate MFR 190/21,6 von 0,5 - 20 g/10 min. Diese Polymere können übliche Zusatzstoffe enthalten, z.B. Stabilisatoren gegen Wärmeoxidation.

EP-A-0480420 lehrt die Verwendung von Flammschutzmittelkombinationen in Formteilen allgemein.

EP-A-933196 beschreibt mehrschichtige Kraftstoffbehälter mit Regenerat-, Mahlgut- und Sperrschichten, welche im Wesentlichen aus Polybuthylenterephthalat bestehen, sowie Haftvermittlerschichten. Die Verarbeitungsstabilität des Mahlguts kann durch Zugabe geeigneter Stabilisatoren (z.B. phenolische und phosphitische Antioxidantien) erhöht werden.

SU-A-1821502 betrifft die Flammfestmachung von hitzeisolierenden Materialien für Hohlkörper. Sie betrifft nicht den Flammschutz von Hohlkörpern selbst.

JP-A-5338848 offenbart Phosphate als Flammschutzmittel in Kraftstoffbehältern, schweigt jedoch darüber, wo das Flammschutzmittel eingearbeitet ist. In JP-A-5338848 eine äußere Lage des Hohlkörpers mit einer pfropfpolymerisierbaren Lösung beschichtet.

Auch die Ausrüstung von Kunststoffen mit Flammschutzmitteln ist seit langem bekannt. Sie dient in erster Linie der Verringerung der Brennbarkeit des organischen Materials. Die Brennbarkeit ist hierbei streng von der Brandfestigkeit zu unterscheiden. Die Brennbarkeit bezeichnet das Verhalten von gasförmigen, flüssigen oder festen Stoffen gegenüber Entflammung: Brennbarkeit liegt vor, wenn ein Stoff nach der Entflammung weiterbrennt, auch wenn die Zündquelle entfernt wird. Die Brennbarkeit eines Feststoffs, insbesondere eines Polymers kann durch Flammschutzmittel vermindert oder völlig aufgehoben werden.

Dagegen wird die Brandfestigkeit derartiger KKB's durch einen Brandtest ermittelt, d.h. der Behälter wird unter definierten Versuchsbedingungen beflammt, wobei die Zeit bis zum Auftreten von Leckagen bestimmt wird.

Die bloße thermische Wirkung der Flamme, die zu einem Erwärmen und damit zum Erweichen bzw. Schmelzen des Kunststoffs führt, kann durch Flammschutzmittel nicht beeinflußt werden. Es ist aber gerade die thermische Wirkung der Flamme, der man bislang die größte Bedeutung zur Beschreibung des Brandverhaltens von flüssigkeitsgefüllten Kunststoffhohlkörpern zumißt. Die oben genannten Schriften belegen dies, zeigen sie doch, wie durch isolierende Schichten bzw. durch Veränderungen des mechanisch/rheologischen Verhaltens der Bauteilmaterialien gerade die thermische Wirkung der Flammen auf das Material reduziert werden soll.

Aufgabe der vorliegenden Erfindung war es daher, ein- oder mehrschichtig aufgebaute Kunststoffhohlkörper mit erhöhter Brandfestigkeit zur Verfügung zu stellen sowie ein Verfahren zu ihrer Herstellung anzugeben, welche die genannten Nachteile des Standes der Technik vermeiden.

Insbesondere war es Aufgabe der vorliegenden Erfindung, ein oder mehrschichtig aufgebaute Kunststoffhohlkörper mit erhöhter Brandfestigkeit zur Verfügung zu stellen, die bei ausreichender Bruch- und Brandfestigkeit ein geringes Eigengewicht aufweisen.

Die der Erfindung zugrundeliegenden Aufgaben werden erfindungsgemäß gelöst durch einen mehrschichtig aufgebauten Kunststoffhohlkörper mit erhöhter Brandfestigkeit, enthaltend mindestens eine Öffnung, der mindestens eine Schicht aus polymerem Material umfaßt, die Flammschutzmittel aufweist.

Vorteilhafte Ausführungsformen sind in den abhängigen Unteransprüchen ausgeführt.

Vor dem Hintergrund des eingangs beschriebenen Standes der Technik war es nicht zu erwarten, daß Flammschutzmittel überhaupt einen erkennbaren Effekt auf die Brandfestigkeit von flüssigkeitsgefüllten Hohlkörpern aus Kunststoffen haben könnten.

Da Flammschutzmittel die mechanischen Eigenschaften von Kunststoffen, wie die Bruchfestigkeit, ungünstig beeinflussen, wurde ein Einsatz derselben in polymeren Schichten von Kunststoffhohlkörpern nicht in Betracht gezogen.

Überraschenderweise hat sich jedoch gezeigt, daß bei gezieltem Einsatz von Flammschutzmitteln in einem mehrschichtigen Kunststoffverbund die Brandfestigkeit des Hohlkörpers deutlich gesteigert werden kann, wobei die mechanische Festigkeit des Hohlkörpers nicht oder nur unwesentlich verändert wird.

Zur gezielten und sparsamen Einbringung des Flammschutzmittels in die Behälterwand der Behälter mehrschichtig aufgebaut. Der mehrschichtige Aufbau der Tankwand ist insbesondere dazu geeignet, die Wirtschaftlichkeit des Einsatzes von Flammschutzmitteln zu erhöhen, da die besondere Wirkung des Flammschutzmittels lediglich an der Außenfläche benötigt wird und sich dort mithin das Flammschutzmittel auf diesen Bereich konzentrieren läßt.

Vorzugsweise wird das Flammschutzmittel in die äußeren Schichten eines mehrschichtig aufgebauten Behälters eingebracht. Dies hat ferner den Vorteil, daß die Konzentration des Flammschutzmittels in den äußeren Schichten eines mehrschichtig aufgebauten Behälters zu keiner Beeinträchtigung von Quetsch- oder Schweißnähten führt, wie sie bei blasgeformten Behältern oder aus zwei Halbschalen zusammengesetzten Behältern üblicherweise auftreten.

Besonders vorteilhaft ist es, wenn das Flammschutzmittel einer Mahlgutschicht zugesetzt ist, wie sie insbesondere bei coextrusionsblasgeformten Behältern häufig anzutreffen ist, da die mechanischen Eigenschaften der Mahlgutschicht durch den Zusatz von Flammschutzmittel im Gegensatz zu einer mahlgutfreien Basisschicht nicht oder nicht wesentlich beeinträchtigt werden. Das Material des Mahlgutes besteht aus Mischungen geeigneter Kunststoffe. Bevorzugt umfaßt das Mahlgut ohne Flammschutzmittel mindestens 50 Gew.-% des Basismaterials, aus dem die tragenden Schichten des Hohlkörpers gebildet sind. In bevorzugten Ausführungsformen enthält das Mahlgut HDPE als Hauptanteil zusammen mit typischen Barrierepolymeren, wie Ethylenvinylalkoholcopolymere, Polyvinylalkohol, Polyester, Polyamid, Fluorpolymere (z.B. PTFE, PVDF) sowie Haftvermittler, welche geeignet sind, die Verträglichkeit bzw. die Anbindung des Barrierepolymeren an das HDPE zu gewährleisten. Bevorzugte Barrierepolymere sind Ethylenvinylalkoholcopolymere, wie z.B. die kommerziell verfügbaren Typen EVAL® (Fa. Kuraray) und SOARNOL® (Fa. Elf Ato), sowie Polyamide (z.B. ULTRAMID®, BASF). Bevorzugte Haftvermittler basieren auf Pfropfcopolymerisaten des Maleinsäureanhydrids mit HDPE, LLDPE oder LDPE.

Der Anteil des Barrierepolymeren liegt in der Mahlgutschicht zwischen 0,1 bis 30 Gew.-%, vorzugsweise 1 bis 20%, insbesondere 2 bis 10%. Der Anteil an Haftvermittler liegt in der Mahlgutschicht zwischen 0,1 bis 50 Gew.-%, vorzugsweise 1 bis 40%, insbesondere 4 bis 20%, wobei hier die Zusätze an Flammschutzmittel nicht berücksichtigt sind.

Die Mahlgutschicht wird bevorzugt aus sogenannten Butzen erzeugt, die beispielsweise bei der Herstellung der Kunststoffhohlkörper als Polymerreste anfallen.

Die Schichten der erfindungsgemäßen Kunststoffhohlkörper, insbesondere die Basisschicht, können aus allen üblicherweise verwendeten Kunststoffen hergestellt werden, beispielsweise aus Polyethylen, Polypropylen, Polyvinylchlorid, Polyamid, Polyketon, Polyester und dergleichen. Bevorzugt wird Polyethylen (PE), insbesondere hochdichtes Polyethylen (HDPE). HDPE eignet sich u.a. hervorragend zum Extrusionsblasformen von Hohlkörpern.

Die erfindungsgemäßen Hohlkörper sind aus mindestens zwei Schichten aufgebaut. Bei diesen Schichten handelt es sich stets um eine tragende Basisschicht, welche üblicherweise die In nenoberfläche des Hohlkörpers bildet. Diese Schicht ist somit für die Dichtigkeit des Behälters von entscheidender Bedeutung. Als zweite Schicht und/oder weitere Schicht(en) enthalten die erfindungsgemäßen Behälter eine nahe zur Außenoberfläche liegende oder diese selbst bildende Polymerschicht, bestehend vorzugsweise zu mehr als 50% aus dem Material der Basisschicht, welcher ein Flammschutzmittel zugesetzt ist. Besonders bevorzugt ist die das Flammschutzmittel enthaltende Schicht eine Mahlgutschicht.

Als weitere Schichten können in der Behälterwand zwischen der Basisschicht und der äußersten Schicht mehrere weitere Schichten vorhanden sein. Hierbei kann es sich beispielsweise um Barriereschichten und/oder um Haftvermittlerschichten handeln, welche falls dies erforderlich ist, für die Anbindung zwischen der Barriereschicht und der Basisschicht sowie der das Flammschutzmittel enthaltenden Schicht sorgen.

Als Barriereschichten kommen vorzugsweise solche in Frage, wie sie durch eine Beschichtung mittels Direktfluorierung, Lackierung oder Plasmapolymerisation der Kunststoffbehälter erhalten werden, oder aber auch solche, die als Schmelze oder Folie in den Verbund eingebracht werden können. Letzteres gelingt mit typischen Barrierekunststoffen, wie zum Beispiel Polyamid oder Ethylenvinylalkoholcopolymeren.

Eine besonders bevorzugte Ausführungsform für einen erfindungsgemäßen, mehrschichtig aufgebauten Hohlkörper bildet ein durch Coextrusionsblasformen hergestellter 6-Schicht-Kunststoffkraftstoffbehälter. Die sechs Schichten umfassen von innen nach außen: HDPE/Haftvermittler/Barrierepolymer/Haftvermittler/Mahlgutschicht/HDPE. Die Dicken dieser Schichten betragen in der gleichen Reihenfolge, jeweils bezogen auf die Gesamtdicke der Behälterwand, HDPE 10 bis 40%; Haftvermittler 1 bis 5%; Barrierepolymer 1 bis 10%; Haftvermittler 1 bis 5%; Mahlgutschicht 10 bis 82%; HDPE 5-30%. Besonders bevorzugt sind folgende Schichtdicken: HDPE 20-40%, Haftvermittler 1-3%, Barrierepolymer 1-3%, Haftvermittler 1-3%, Mahlgutschicht 21 bis 67%, HDPE 10-30%. In dieser Ausführungsform wird das Flammschutzmittel vorzugsweise der Mahlgutschicht zugefügt. Jedoch sind auch beliebige andere Kombinationen der oben genannten Kunststoffmaterialien in erfindungsgemäßen Mehrschichthohlkörpern möglich, je nach Anforderungen an die Brand- und Bruchfestigkeit.

Die Menge an Flammschutzmittel, welches in eine gesonderte Schicht eingebracht wird, liegt bezogen auf das Gesamtgewicht des Kunststoffhohlkörpers zwischen 1 bis 25 Gew.-%. Bevorzugt werden 1 bis 10 Gew.-%, besonders bevorzugt 2 bis 6 Gew.-%.

Die Herstellung erfindungsgemäßer Kunststoffhohlkörper mit erhöhter Brandfestigkeit erfolgt dadurch, daß der Kunststoffhohlkörper aus einer polymeren Basisschicht und gegebenenfalls weiteren Schichten, umfassend vorzugsweise Mahlgutschicht, Haftvermittlerschicht und/oder Barriereschicht geformt wird, wobei wenigstens einer Schicht, vorzugsweise der Mahlgutschicht, Flammschutzmittel zugesetzt wird und man gegebenenfalls den Kunststoffhohlkörper einer Temperaturbehandlung bei 60-135°C unterwirft.

Insbesondere erfolgt die Herstellung der erfindungsgemäßen Hohlkörper durch Extrusionsblasformen, Spritzgießen oder Thermoformen, wobei bei den beiden letzten Varianten zwei Behälterhalbschalen erzeugt und zusammengeschweißt werden müssen. Bevorzugt ist das Blasformen. Besonders bevorzugt ist das Coextrusionsblasformen, wobei im Falle von etwa vorhandener Mahlgutschichten das Flammschutzmittel in die Mahlgutschichten eingearbeitet wird.

Grundsätzlich ist es auch möglich, das Flammschutzmittel nicht gleichmäßig, sondern lediglich partiell in eine Schicht eines Mehrschichtverbundes einzubringen. Hierdurch lassen sich die Kosten und die ungünstige Wirkung des Flammschutzmittels auf die mechanischen Eigenschaften des Bauteils weiter minimieren. Dieses partielle Einbringen des Flammschutzmittels kann im Falle des Blasformens über zusätzliche Extruder, ähnlich einer Sichtstreifenextrusion und/oder einer sequentiellen Coextrusion erfolgen.

Bei den mehrschichtig aufgebauten Behältern wird das Flammschutzmittel in einer oder mehreren der äußeren Schichten eingearbeitet. Dies hat insbesondere den Vorteil, daß die bruchmechanischen Eigenschaften im wesentlichen durch die tragende innerste Schicht bestimmt werden, wohingegen die Brandfestigkeitseigenschaften sinnvollerweise durch die äußeren Schichten maßgeblich beeinflußt werden.

Eine weitere Verbesserung der mechanischen Eigenschaften läßt sich insbesondere beim Einsatz von Polyethylen durch ein Tempern der Bauteile bei Temperaturen von 60-135°C in Zeiträumen von 0,25 bis 30 Stunden erzielen.

Erfindungsgemäß geeignete Flammschutzmitteln sind alle anorganischen und/oder organischen Stoffe, die durch Zusatz zu Kunststoffen aller Art deren Entflammung verhindern, die Entzündung behindern und die Verbrennung erschweren oder gänzlich verhindern. Beispiele hierfür sind:
- Halogenierte, insbesondere bromhaltige organische Verbindungen;
- antimonhaltige Flammschutzmittel, wobei die Kombination von Antimontrioxid mit halogenhaltigen Flammschutzmitteln besonders bevorzugt wird;
- phosphorhaltige Flammschutzmittel, auch halogenierte organische Phosphorverbindungen;
- spezielle anorganische Flammschutzmittel wie Aluminiumhydroxid, Magnesiumhydroxid und verschiedene Borate.

Eine umfangreiche Beschreibung gängiger Flammschutzmittel findet sich zum Beispiel in D.L. Buszard: "Polymer flammability - mechanisms of achieving flame retardance" in G. Cox, G. Stevens (Herausgeber) "Fundamental Aspects of Polymer Flammability", IOP Short Meetings Series No. 4, 1987, London.

Im Rahmen der vorliegenden Erfindung verwendbare halogenhaltige Flammschutzmittel umfassen beispielsweise Chlorparaffine, Hexabrombenzol, bromierte Diphenylether und andere Bromverbindungen wie zum Beispiel Decabromdiphenyloxid, Pentabromdiphenyloxid, Decabromdiphenyl-, Octabromdiphenyl-, Tribromphenyl-Tribrompropylether, 2,2-Bis-[4-(2,3-dibrompropoxy)-3,5-dibromphenyl]-propan und Hexabromcyclododekan.

Insbesondere sind hierbei die aliphatischen Flammschutzmittel bevorzugt, besonders das Hexabromcyclododekan.

Geeignete antimonhaltige Flammschutzmittel umfassen Antimontrioxid, sowie kolloidales Antimonpentoxid. Besonders bevorzugt im Rahmen der vorliegenden Erfindung wird die Kombination von Antimontrioxid mit halogenhaltigen Flammschutzmitteln.

Phosphorhaltige Flammschutzmittel umfassen beispielsweise roten Phosphor, Phosphate, Phosphite, Phosphonate, Resorcinbis(diphenylphosphat), Tri-kresyl-phosphat und dergleichen. Auch halogenierte organische Phosphorverbindungen, wie zum Beispiel Tris-(2,3-dibrompropyl)phosphat oder Tris-(2-brom-4-methylphenyl)phosphat sind erfindungsgemäß verwendbar.

Ferner sind folgende weitere anorganische Flammschutzmittel erfindungsgemäß verwendbar: Aluminiumoxidhydrate, Aluminiumhydroxid, basisches Aluminiumoxalat, Magnesiumhydroxid, beschichtetes Magnesiumoxid, Zinksulfid, Metallborate wie beispielsweise Zinkborat, Kalziumborat, Bariummetaborat und expandierbarer Graphit.

Die vorliegende Erfindung kann zur Herstellung von allen Arten von Kunststoffhöhlkörpern verwendet werden, bei welchen erhöhte Brandfestigkeit gefordert und/oder erwünscht ist. Insbesondere eignet sich die vorliegende Erfindung für Kunststoffhohlkörper zur Lagerung und zum Transport brennbarer Flüssigkeiten. Beispiele hierfür sind: Benzinkanister, Kunststofftanks zur Lagerung und zum Transport von Heizöl, Diesel und dergleichen, Kraftstoffbehälter und Tanks für Otto- und Dieselkraftstoffe in Fahrzeugen, Transportbehälter auf Nutzfahrzeugen, beispielsweise für landwirtschaftliche Spritzmittel, Lösemittelbehälter, Lösungsmittel(sammel)behälter, Kunststoffflaschen etc.

Die Erfindung soll nachfolgend anhand einiger den Schutzumfang nicht einschränkender Beispiele erläutert werden.

### Beispiele 1 bis 3

Zur Untersuchung des Brandverhaltens coextrusionsblasgeformter Hohlkörper wurden Kunststoffkraftstoffbehälter aus Polyethylen mit einem 6-schichtigen Aufbau - von innen nach außen HDPE (33,1%)/Haftvermittler (2%)/Barrierepolymer (3,7%)/Haftvermittler (2%)/Mahlgutschicht (44,1%)/HDPE (15,1%) - hergestellt (alle Angaben in Gewichtsprozent bezogen auf den Behälter). Als Barrierepolymer diente EVAL^{®} EP F 101 A als Haftvermittler Admer^{®} GT5E. Im Vergleichsbeispiel 1 wird LUPOLEN^{®} 4261 AG als Basismaterial eingesetzt. Im Vergleichsbeispiel 2 wird ein Polymer eingesetzt, welches die Eigenschaftskombination dessen in der Patentschrift EP 0 645 400 B1 besitzt, eingesetzt. Schließlich wird im erfindungsgemäßen Beispiel 3 ein Tank auf Basis des LUPOLEN^{®} 4261 AG hergestellt, wobei der Mahlgutschicht das Flammschutzmittel CONSTAB FR 7062 DL zugesetzt wurde, so daß sich ein Gehalt von 10% des Batchs CONSTAB FR 7062 DL im Mahlgut konstant einstellte. In der nachfolgenden Tabelle 1 finden sich die Materialdaten der beiden verschiedenen Polyethylentypen. Die KKB wurden verschiedenen mechanischen Prüfungen unterzogen, deren Ergebnisse in Tabelle 2 zusammengefaßt sind.

Die Prüfung des Berstdrucks erfolgte bei Raumtemperatur und einer linearen Drucksteigerungsrate von 0,5 bar/min.

Für den Falltest wurden die Tanks mit einer Wasser-Glykolmischung vollständig gefüllt und auf -40°C abgekühlt. Die kalten Tanks wurden aus 6 m Höhe aus insgesamt vier verschiedenen Fallpositionen abgeworfen. Alle Fallpositionen wurden doppelt geprüft, so daß für jede Tankserie insgesamt acht Tanks geprüft wurden. Die Auswertung erfolgte derart, daß die Zahl der Abwürfe, die unbeschadet überstanden wurden, in Beziehung zur maximal möglichen Zahl der Abwürfe (hier 8) gesetzt und als Prozentzahl angegeben wurde.

Die Ermittlung der Brandfestigkeit erfolgte in Anlehnung an die Vorschrift der ECE R 34 Anhang 5. Dabei wird der Tank in eine originale Fahrzeugkarosserie eingebaut, zur Hälfte mit Wasser gefüllt und einer zweiphasigen Beflammung durch brennendes Benzin ausgesetzt. Zur Bestimmung der Brandfestigkeit wurde die Zeit der ersten Beflammungsphase, der Direktbeflammung, schrittweise verlängert, bis ein Loch in der Tankwand entstand. Die Dauer der zweiten Beflammungsphase lag konstant bei 60 sec.

Die hier vorgestellten Beispiele zeigen, daß mit dem in EP 0 645 400 B1 beschriebenen Material keine Verbesserung der Brandfestigkeit erreichbar ist. Dagegen vermag ein Zusatz von 10 Gew.-% Flammschutzmittel in der Mahlgutschicht also bezogen auf das Gesamtgewicht des Tanks ein Zusatz von lediglich 4,4% die Brandfestigkeit des Tanks um 14% zu erhöhen. Die mechanische Festigkeit des Behälters bleibt weitgehend auf dem Niveau des entsprechenden Behälters ohne Flammschutzmittel aus Beispiel 1.

**Tabelle 1**

| Eigenschaft | Einheit | LUPOLEN^{®} 4261 AG | Versuchsmaterial gemäß EP 645 400 |
|---|---|---|---|
| Comonomer-Gehalt | % | <1 | <1 |
| Dichte | g/ccm | 0,945 | 0,954 |
| MFR 190°C/21,6kg | g/10min | 6 | 3,7 |
| η-Wert | dl/g | 3,7 | 4,7 |
| R-Wert* | | 2,39 | 2,56 |
| HRI-IZOD(-30°C)* | J | 0,68 | 1,13 |

| | | | |
|---|---|---|---|
| *Messungen gemäß Angaben in EP 645 400 B1 | | | |

**Tabelle 2**

| Prüfung | KKB Beispiel 1 | KKB Beispiel 2 | KKB Beispiel 3 |
|---|---|---|---|
| Berstdruck | 3,75bar | 4,55bar | 3,4bar |
| 6m-Falltest(-40°C) | 75% | 75% | 62,5% |
| Brandtest | 72+60sec | 66+60sec | 90+60sec |

## Patentansprüche

1. Kunststoffhohlkörper mit erhöhter Brandfestigkeit, ermittelt in Anlehnung an die Vorschrift ECE R 34, Anhang 5, enthaltend mindestens eine öffnung, **dadurch gekennzeichnet, dass** der Kunststoffhohlkörper mehrschichtig aufgebaut ist und mindestens eine Schicht aus polymerem Material umfasst, die halogenhaltige, phosphorhaltige, organische, anorganische und/oder antimonhaltige Flammschutzmittel aufweist, wobei das Flammschutzmittel in einer oder in mehreren der äußeren Schichten eingearbeitet wird.

2. Kunststoffhohlkörper nach Anspruch 1, **dadurch gekennzeichnet, daß** der Kunststoffhohlkörper mehrschichtig, umfassend vorzugsweise Basisschicht, Mahlgutschicht, Haftvermittlerschicht und/oder Barriereschicht aufgebaut ist, wobei Flammschutzmittel vorzugsweise in einer Mahlgutschicht enthalten sind.

3. Kunststoffhohlkörper nach einem der Ansprüche 1 oder 2, **dadurch gekennzeichnet, daß** das polymere Material der Schichten Polyethylen, Polypropylen, Polyvinylchlorid, Polyamid, Polyketon, Polyester und/oder deren Mischungen umfaßt.

4. Kunststoffhohlkörper nach einem der vorhergehenden Ansprüche, **dadurch gekennzeichnet, daß** der Hohlkörper eine oder mehrere Mahlgutschichten umfaßt, die aus mindestens 50% des Materials besteht, aus dem die innerste Schicht des Hohlkörpers gebildet sind.

5. Kunststoffhohlkörper nach einem der vorhergehenden Ansprüche, **dadurch gekennzeichnet, daß** der Kunststoffhohlkörper Flammschutzmittel in einer Menge von 1 bis 25 Gew.-%, bevorzugt 1 bis 10 Gew.-%, besonders bevorzugt 2 bis 6 Gew.-% bezogen auf das Gesamtgewicht des Hohlkörpers aufweist.

6. Kunststoffhohlkörper nach einem der vorhergehenden Ansprüche, **dadurch gekennzeichnet, daß** das Flammschutzmittel ausschließlich oder in höherer Konzentration in einzelne Bereiche und/oder Zonen des Kunststoffhohlkörpers eingebracht wird.

7. Kunststoffhohlkörper nach einem der vorhergehenden Ansprüche, umfassend von innen nach außen:
• eine Schicht aus HDPE mit einer Dicke von 10 bis 40%,
• eine Haftvermittlerschicht mit einer Dicke von 1 bis 5%,
• eine Barrierepolymerschicht mit einer Dicke von 1 bis 10%,
• eine Haftvermittlerschicht mit einer Dicke von 1 bis 5%,
• eine Mahlgutschicht mit einer Dicke von 10 bis 82%,
• eine Schicht aus HDPE mit einer Dicke von 5 bis 30%,
• jeweils bezogen auf die Gesamtdicke der Behälterwand.

8. Verwendung des Kunststoffhohlkörpers nach einem der vorhergehenden Ansprüche als Kunststoffkraftstoffbehälter in Kraftfahrzeugen, Benzinkanister, Kunststofftanks zur Lagerung und zum Transport von Heizöl, Diesel und dergleichen, Transportbehälter auf Nutzfahrzeugen, beispielsweise für landwirtschaftliche Spritzmittel, Lösemittelbehälter, Lösungsmittelbehälter, Kunststoffflaschen und dergleichen.

9. Verfahren zur Herstellung eines Kunststoffhohlkörpers mit erhöhter Brandfestigkeit, nach einem der, Ansprüche 1 bis 7, **dadurch gekennzeichnet, daß** der Kunststoffhohlkörper aus einer polymeren Basisschicht und gegebenenfalls weiteren Schichten, umfassend vorzugsweise Mahlgutschicht, Haftvermittlerschicht und/oder Barriereschicht geformt wird, wobei wenigstens einer Schicht, vorzugsweise der Mahlgutschicht, Flammschutzmittel zugesetzt wird und man gegebenenfalls den Kunststoffhohlkörper einer Temperaturbehandlung bei 60-135°C unterwirft.

10. Verfahren nach Anspruch 9, **dadurch gekennzeichnet, daß** die Dauer der Temperaturbehandlung zwischen 0,25 bis 30 Stunden beträgt.

11. Verfahren nach Anspruch 9 oder 10, **dadurch gekennzeichnet, daß** die gezielte Einbringung von Flammschutzmittel in einzelne Bereiche und/oder Zonen des Kunststoffhohlkörpers mittels Sichtstreifenextrusion, sequentieller Coextrusion und/oder dergleichen erfolgt.

12. Verfahren nach einem der Ansprüche 9 bis 11, **dadurch gekennzeichnet, daß** die partielle Einbringung von Flammschutzmitteln in eine Schicht des Mehrschichtverbundes mittels Blasformen über zusätzliche Extruder, ähnlich einer Sichtstreifenextrusion und/oder einer sequentiellen Coextrusion erfolgt.

## Claims

1. Plastic hollow body having an increased resistance to fire, determined in accordance with the specification ECE R 34, appendix 5, comprising at least one opening, **characterized in that** the plastic hollow body is constructed in several layers and comprises at least one layer of polymeric material which contains halogen-containing, phosphorus-containing, organic, inorganic and/or antimony-containing flameproofing agents, wherein the flameproofing agent is incorporated into one or into several of the outer layers.

2. Plastic hollow body according to claim 1, **characterized in that** the plastic hollow body is constructed in several layers, comprising preferably a base layer, ground material layer, adhesion promoter layer and/or barrier layer, wherein flameproofing agents are preferably contained in a ground material layer.

3. Plastic hollow body according to one of claims 1 or 2, **characterized in that** the polymeric material of the layers comprises polyethylene, polypropylene, polyvinyl chloride, polyamide, polyketone, polyester and/or mixtures thereof.

4. Plastic hollow body according to one of the preceding claims, **characterized in that** the hollow body comprises one or more ground material layers which comprise at least 50 % of the material from which the innermost layer of the hollow body is formed.

5. Plastic hollow body according to one of the preceding claims, **characterized in that** the plastic hollow body contains flameproofing agents in an amount of from 1 to 25 wt.%, preferably 1 to 10 wt.%, particularly preferably 2 to 6 wt.%, based on the total weight of the hollow body.

6. Plastic hollow body according to one of the preceding claims, **characterized in that** the flameproofing agent is incorporated exclusively or in a relatively high concentration into individual regions and/or zones of the plastic hollow body.

7. Plastic hollow body according to one of the preceding claims, comprising, from the inside outwards:
• a layer of HDPE having a thickness of from 10 to 40 %,
• an adhesion promoter layer having a thickness of from 1 to 5 %,
• a barrier polymer layer having a thickness of from 1 to 10 %,
• an adhesion promoter layer having a thickness of from 1 to 5 %,
• a ground material layer having a thickness of from 10 to 82 %,
• a layer of HDPE having a thickness of from 5 to 30 %,
• in each case based on the total thickness of the container wall.

8. Use of the plastic hollow body according to one of the preceding claims as plastic fuel containers in motor vehicles, petrol canisters, plastic tanks for storage and transportation of heating oil, diesel and the like, transportation containers on utility vehicles, for example for agricultural spraying compositions, dissolving agent containers, solvent containers, plastic bottles and the like.

9. Process for the production of a plastic hollow body having an increased resistance to fire, according to one of claims 1 to 7, **characterized in that** the plastic hollow body is formed from a polymeric base layer and optionally further layers, comprising preferably a ground material layer, adhesion promoter layer and/or barrier layer, wherein flameproofing agent is added to at least one layer, preferably the ground material layer, and the plastic hollow body is optionally subjected to a heat treatment at 60 - 135 °C.

10. Process according to claim 9, **characterized in that** the duration of the heat treatment is between 0.25 to 30 hours.

11. Process according to claim 9 or 10, **characterized in that** the targeted introduction of flameproofing agent into individual regions and/or zones of the plastic hollow body is carried out by means of visible strip extrusion, sequential coextrusion and/or the like.

12. Process according to one of claims 9 to 11, **characterized in that** the partial introduction of flameproofing agents into a layer of the multilayer composite is carried out by means of blow moulding via additional extruders, similarly to a visible strip extrusion and/or a sequential coextrusion.

## Revendications

1. Corps creux en matière plastique à résistance renforcée aux incendies, déterminé selon la directive CEE R 34, annexe 5, contenant au moins une ouverture, **caractérisé en ce que** le corps creux en matière plastique est constitué de plusieurs couches et comprend au moins une couche de matériau polymère qui présente des agents ignifuges contenant des halogènes, contenant du phosphore, étant organiques, inorganiques et/ou contenant de l'antimoine, l'agent ignifuge étant incorporé dans l'une ou plusieurs des couches externes.

2. Corps creux en matière plastique selon la revendication 1, **caractérisé en ce que** le corps creux en matière plastique est constitué de plusieurs couches comprenant de préférence, une couche de base, une couche d'éléments broyés, une couche favorisant l'adhérence et/ou une couche barrière, des agents ignifuges étant contenus de préférence dans une couche d'éléments broyés.

3. Corps creux en matière plastique selon l'une des revendications 1 ou 2, **caractérisé en ce que** le matériau polymère des couches comprend le polyéthylène, le polypropylène, le polychlorure de vinyle, le polyamide, la polycétone, le polyester et/ou leurs mélanges.

4. Corps creux en matière plastique selon l'une des revendications précédentes, **caractérisé en ce que** le corps creux comprend une ou plusieurs couches d'éléments broyés qui consistent en au moins 50 % du matériau à partir duquel la couche la plus interne du corps creux est formée.

5. Corps creux en matière plastique selon l'une des revendications précédentes, **caractérisé en ce que** le corps creux présente des agents ignifuges en une quantité de 1 à 25 % en poids, de préférence, de 1 à 10 % en poids, de manière particulièrement préférée, 2 à 6 % en poids par rapport au poids total du corps creux.

6. Corps creux en matière plastique selon l'une des revendications précédentes, **caractérisé en ce que** l'agent ignifuge est incorporé exclusivement ou en concentration supérieure dans des régions individuelles et/ou des zones du corps creux en matière plastique.

7. Corps creux en matière plastique selon l'une des revendications précédentes, comprenant, de l'intérieur vers l'extérieur :
- une couche de HDPE présentant une épaisseur de 10 à 40 %,
- une couche favorisant l'adhérence présentant une épaisseur de 1 à 5 %,
- une couche barrière en polymère présentant une épaisseur de 1 à 10 %,
- une couche favorisant l'adhérence présentant une épaisseur de 1 à 5 %,
- une couche d'éléments broyés présentant une épaisseur de 10 à 82 %
- une couche de HDPE présentant une épaisseur de 5 à 30 %
- respectivement, par rapport à l'épaisseur totale de la paroi du conteneur.

8. Utilisation du corps creux en matière plastique selon l'une des revendications précédentes, en tant que conteneur de carburant en matière plastique dans des véhicules automobiles, en tant que bidons d'essence, cuves en matière plastique pour le stockage et le transport de mazout, de gasoil et similaires, en tant que conteneur de transport sur des véhicules utilitaires, par exemple, pour des produits agricoles à pulvériser, en tant que conteneurs de solvants, conteneurs de dissolvants, bouteilles en plastiques et similaires.

9. Procédé de production d'un corps creux en matière plastique à résistance renforcée aux incendies, selon l'une des revendications 1 à 7, **caractérisé en ce que** le corps creux en matière plastique est formé d'une couche de base polymère et éventuellement, d'autres couches, comprenant de préférence une couche d'éléments broyés, une couche favorisant l'adhérence et/ou une couche barrière, un agent ignifuge étant ajouté à au moins l'une des couches, de préférence la couche d'éléments broyés et on soumet ensuite éventuellement le corps creux en matière plastique à un traitement thermique de 60 à 135° C.

10. Procédé selon la revendication 9, **caractérisé en ce que** la durée du traitement thermique se situe entre 0,25 et 30 heures.

11. Procédé selon la revendication 9 ou 10, **caractérisé en ce que** l'incorporation ciblée d'un agent ignifuge dans des régions individuelles et/ou des zones du corps creux en matière plastique s'effectue par extrusion à bandes de vision, co-extrusion séquentielle et/ou similaires.

12. Procédé selon l'une des revendications 9 à 11, **caractérisé en ce que** l'incorporation partielle d'un agent ignifuge dans une couche de l'assemblage multi-couche s'effectue au moyen de moules par une extrudeuse supplémentaire, de façon similaire à une extrusion à bandes de vision et/ou à une co-extrusion séquentielle.
